# EUROPEAN PATENT SPECIFICATION

(11) **EP 0 647 813 B1**
(45) Date of publication and mention of the grant of the patent: **08.07.1998**
(21) Application number: 94830475.3
(22) Date of filing: 06.10.1994
(51) Int. Cl.: F16M 11/38

(54) **Extensible device for supporting objects, especially illumination devices as in photographic studio and the like**
Ausziehbare Vorrichtung zum Tragen von Objekten, insbesondere Beleuchtungsvorrichtungen von fotografischen Studio und dergleichen
Dispositif extensible de support d'objets, en particulier appareils d'éclairage de studio photographique et analogue

(30) Priority: 06.10.1993 IT FI930109 U
(43) Date of publication of application: 12.04.1995
(73) Proprietor: INDUSTRIA FOTOTECNICA FIRENZE S.r.l., I-50041 Calenzano, Firenze (IT)
(72) Inventor: Fusi, Giuliano, I-50141 Firenze (IT)
(74) Representative: Mannucci, Gianfranco, Dott.-Ing.

(56) References cited:
- FR-A- 458 666
- GB-A- 1 160 668
- GB-A- 2 083 433
- US-A- 1 501 524

## Description

The present invention relates to an extensible device for supporting objects, with special features making it both practical and easy to use, especially for illumination devices as in photographic studios and the like.

The present invention relates to a device from which objects, such as spotlights or other means of illumination, may be hung. It is of the kind that comprises a pantograph system of articulated rods linking together two attachment points, one of which is designed to support the object and the other to connect the device to a supporting structure, typically an overhead structure.

These devices have means for balancing the weight of the suspended object and enabling the articulated rod system to be lengthened or shortened. These means currently consist (in the smaller types of systems) of one or two leaf springs that provide an approximately constant load independently of how much the system may be extended and that are spiral-wound. An example of such a device is disclosed in GB-A-2,083,433. These springs have many drawbacks, including:
- the risk of sudden breakage when the spring is under tension. This can cause very serious harm and permanent injury to anyone near the device;
- the difficulty of adjusting the load of the spring to suit the weight of the object hanging from the device. In order to make adjustments, the spring has to be dismantled from the articulated rod system;
- the articulated rod system contracts suddenly under the spring loading whenever the object it is supporting is removed.

The object of the present invention is to provide a device of the kind outlined above which will overcome these drawbacks and be safe and practical in use.

These and other objects, which will be clear to those skilled in the art as they read the following text, are achieved by the features described in Claim 1. GB-A-1,160,668 discloses a telescopic load support with a set of telescopically related tubes, at one end of which a spool is arranged. The cable wound on the spool is attached at the opposite end at the telescopic tubes, to support a load.

In practice, in an advantageous embodiment, the device comprises in combination: a structure composed of articulated rods extending between a fixed attachment point and a free attachment point for the object to be supported, this structure being extensible in the direction of the straight line joining the fixed attachment point and the free attachment point, and being symmetrical about this line and substantially rigid in directions perpendicular to the direction of extension. The device also comprises a spool rotating about a pin inserted in said structure at a point close to the free attachment point, connected to spring means for winding up a cord; said cord has one end fixed to said structure close to said line at a point between the fixed attachment point and the spool, and the other end fixed to the circumference of the spool.

Extending said structure draws out said cord from the spool, the drawing out being opposed by means which adjustably brake the rotation of the spool only in the direction of unwinding of the cord; in this way said brake means oppose the component of the weight of the structure and of the object to be supported in the direction of extension of the structure, making it possible to balance said total weight and to keep the supported object at the desired distance from the fixed point; the free turning of which spool in the opposite direction together with the winding up of the cord onto the spool results in the structure moving in the opposite direction to that of extension with no extra load other than that of the total weight of the structure and object and of the friction between the moving parts of said structure.

The drawings shows one possible embodiment of the invention, and in particular:
Fig. 1 shows a side elevation of the supporting device;
Fig. 2 shows another side elevation of the supporting device viewed through the line II-II marked in Fig. 1;
Fig. 3 shows a section through the line III-III marked in Fig. 1; and
Figs. 4 and 5 show sections through IV-IV and V-V marked in Fig. 3.

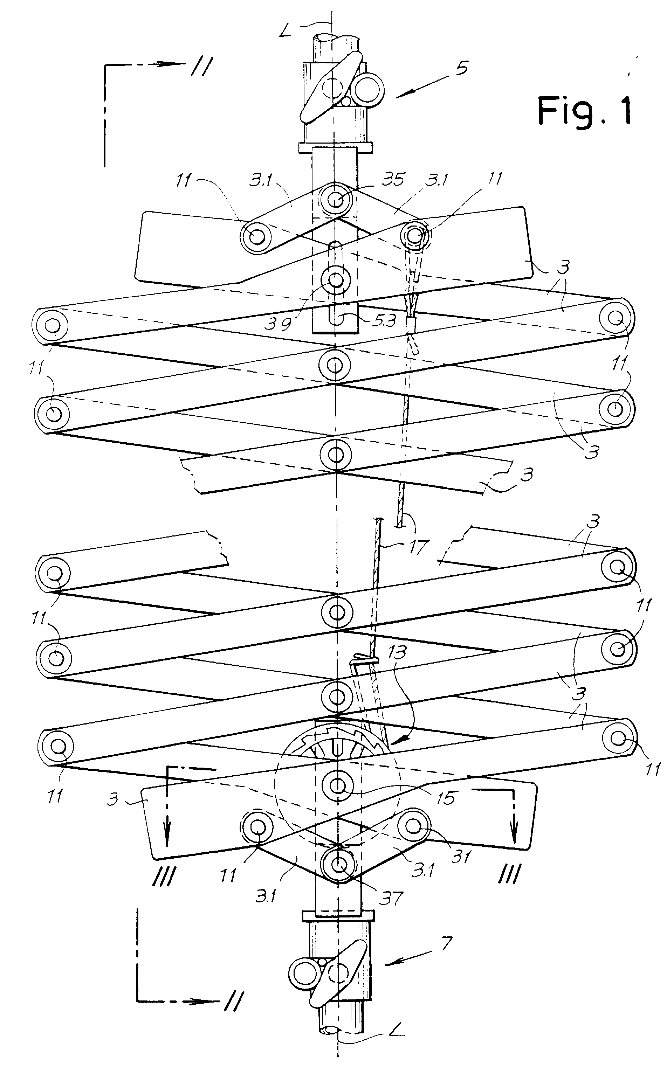

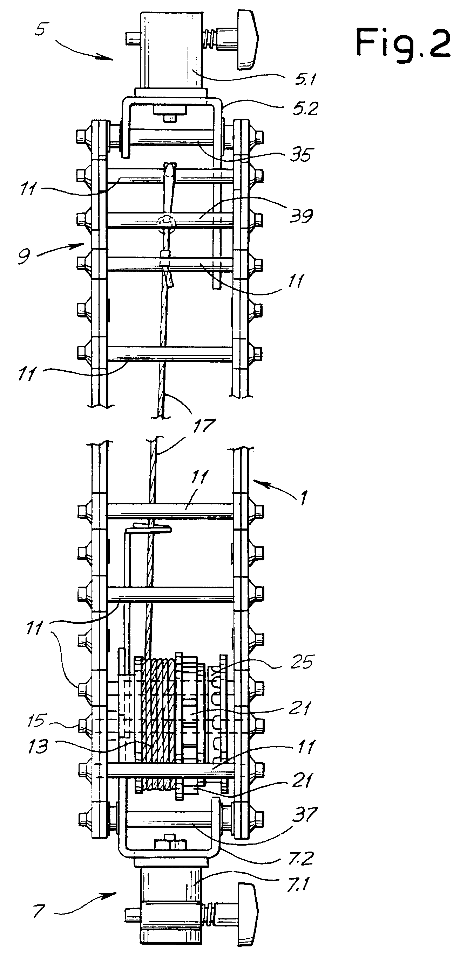

As shown in Figs. 1 and 2, the device comprises: a first series (1) of rods (3) hinged together to form a succession of deformable parallelograms extending along the straight line (L-L) joining a fixed attachment point (5) and a free attachment point (7), each rod forming part of two adjacent parallelograms, except rods (3.1) at the beginning and end of the series; and a second series (9) of hinged rods identical to the first series (1) and facing the latter, the two series having in common at least the outermost hinge pins (11) of said rods (3), so that the assembly has sufficient transverse rigidity.

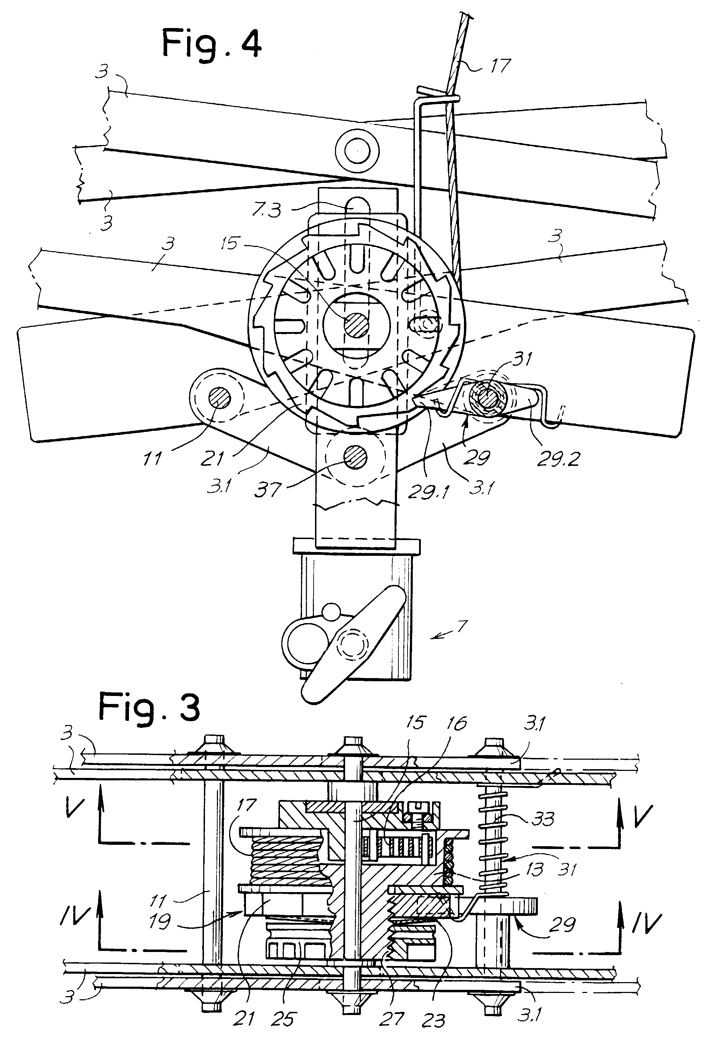

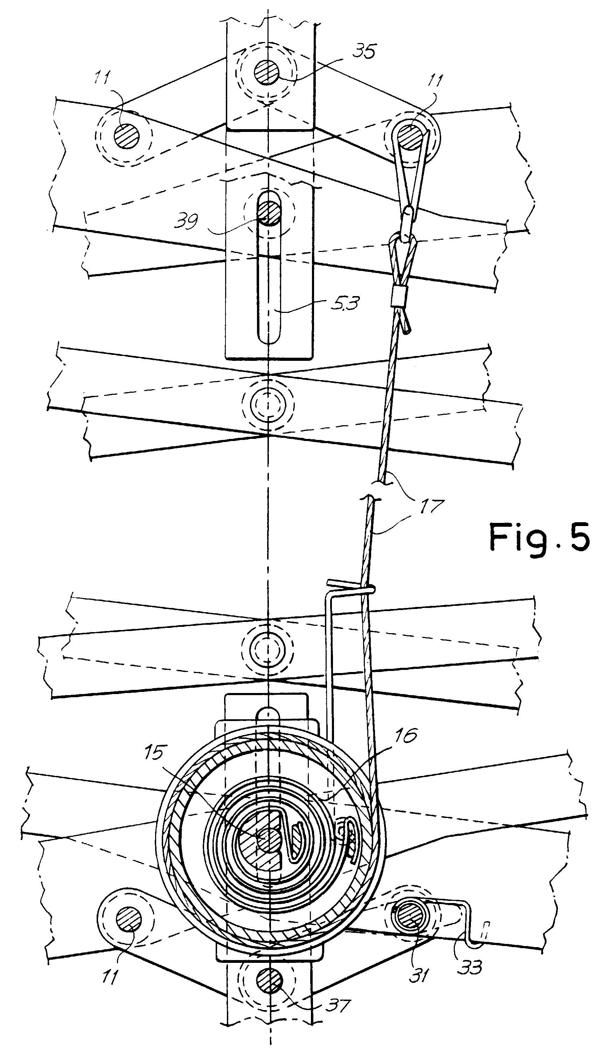

The device also comprises a spool (13) which rotates about a pin (15) (Figs. 3, 4 and 5) inserted into said rod structure at a point close to the free attachment point (7), said spool (13) having a spiral spring (16) for the purposes of winding up a cord (17). Said cord has one end fixed to the rod structure close to said line (L-L) at a point between the fixed attachment point (5) and the spool (13), and the other end fixed to the circumference of the spool (13); extending said rod structure draws out said cord (17) from the spool (13).

The drawing out of the cord (17) from the spool (13) is opposed by means (19) which adjustably brake the rotation of the spool (13) only in the direction of unwinding of the cord. In this way said brake means (19) oppose the component of the weight of the rod structure and of the object to be supported, in the direction of extension of the structure, in order to make it possible to balance said total weight and to keep the supported object at the desired distance from the fixed attachment point (5). The free turning of the spool in the opposite direction together with the winding up of the cord (17) onto the spool (13), results in the rod structure moving in the opposite direction to that of extension with no extra load other than that of the total weight of the structure and object and of the friction between the moving parts of said structure.

Said means (19) for opposing the free turning of the spool (13) in the unwinding direction of the cord (17) comprise: a ratchet mechanism with a toothed wheel (21) mounted coaxially on the spool (13) and pressed axially against the spool by a Belleville washer (23) with a force that can be adjusted by means of a nut (25) screwed onto a threaded seat (27) integral and coaxial with the spool (13), so as to create adjustable frictional torque between the toothed wheel (21) and the spool (13); and a pawl (29) mounted on a pin (31) that links together two rods carrying the pin (15) of the spool (13). Said pawl (29) is acted on by a spring (33) so that one end (29.1) of the pawl is introduced between the teeth of the toothed wheel (21), thereby preventing it from rotating only in the direction of unwinding of the cord (17), while the other end (29.2) can be grasped manually to disengage the pawl (29) when it is wished to extend the supporting device without having to overcome the friction of the brake.

The fixed and free attachment points (5, 7) each comprise a sleeve (5.1, 7.1) fitted with a wing nut for manually fastening the attachment point, on the one hand, of the supporting device to a fixed rod and, on the other hand, of the object to be supported to the supporting device; each of said sleeves (5.1, 7.1) is firmly fixed to a U bracket (5.2, 7.2) in which one of the two arms of the U is extended and contains a slot (5.3, 7.3). Said U brackets (5.2, 7.2) are hinged by a pin (35, 37) to the free end of the last rods (3.1) of the two series (1, 9) of rods forming said structure, and by means of said slots (5.3, 7.3) the first is guided on one of the rod structure pins (39) located on the axis of symmetry of said structure and the second is guided on the pin (15) of the spool (13) in such a way as to keep the sleeves (5.1, 7.1) lined up with each other however far the supporting device is extended.

## Claims

1. Extensible device for supporting an object, especially an illuminating appliance for photographic studios, comprising:
- a pantograph structure including opposite parallel series of articulated rods (3, 9) for linking together two end attachment points (5, 7), one (7) of which is designed to be fastened to the object to be supported and the other (5) to be fastened to a supporting structure; and
- at least one spool (13) for a cord (17) that is capable of being wound onto and off said spool and is fastened to the structure of articulated rods (3, 9), characterized in that the assembly formed by the spool and the cord (13, 17) constitutes a means of balancing the weight of the object supported by said device, through the use of elastic return means (16) and an adjustable brake means (23, 25) acting on said spool (13).

2. Device according to Claim 1, in which said spool (13) is mounted on a pin (15) that joins together two opposite and parallel series (3, 9) of articulated rods.

3. Device according to Claim 1, in which: the articulated rod structure capable of extension in the direction of the straight line (L-L) joining the two endmost attachment points (5, 7) is symmetrical about said line and substantially rigid in directions perpendicular thereto; the spool (13) is rotatable about a pin (15) inserted in said rod (3, 9) structure at a point close to one (7) of said attachment points (5, 7), said spool being provided with spring means (16) for winding up the cord (17); said cord has one end fixed to said rod structure close to said line (L-L) at a point between the attachment point (5) furthest from the spool and the spool (13) itself, and the other end fixed to the circumference of the spool (13); extending which rod structure draws out said cord (17) from the spool, said drawing out being opposed by means (19) which adjustably brake the rotation of the spool (13) only in the direction of unwinding of the cord, so as to oppose the component of the weight of the supporting device and of the object to be supported in the direction of extension of the rod structure in order to make it possible to balance said total weight and keep the supported object at the desired distance from the point of attachment to the supporting structure (5); the free turning of which spool in the opposite direction together with the winding up of the cord (17) onto the spool (13) results in the rod structure moving in the opposite direction to that of extension with no extra load other than that of the total weight of the supporting device and object and of the friction between the moving parts of said rod structure.

4. Device according to Claim 1, 2 or 3, in which said spool possesses: a recessed seat containing a spiral spring (16) whose outermost end is attached to the spool and whose innermost end is attached to the pin and, on the opposite side from said recessed seat and coaxial with said pin (15), a threaded seat (27) on which is mounted a toothed wheel (21) belonging to a ratchet-type arresting mechanism, said wheel (21) being positioned between the body of the spool and a nut (25) screwed onto said seat (27), while elastic means (23) are located between said nut (25) and said toothed wheel (21).

5. Device according to Claim 4, in which said elastic means comprise a Belleville washer (23).

6. Device according to Claim 1, 2 or 3, in which said articulated rod structure comprises: a first series (1) of rods (3) hinged together to form a succession of deformable parallelograms extending along the straight line (L-L) joining the two endmost attachment points (5, 7), each rod forming part of two adjacent parallelograms; and a second series (9) of hinged rods identical to the first series (1) and facing the latter, the two series having in common at least the outermost hinge pins (11) of said rods (3) so that the assembly has sufficient transverse rigidity.

7. Device according to Claim 6, in which said attachment points (5, 7) each comprise a sleeve (5.1, 7.1) fitted with a wing nut for manually fastening the attachment point, on the one hand, of the supporting device to a fixed rod and, on the other hand, of the object to be supported to said supporting device; said sleeves (5.1, 7.1) each being firmly fixed to a U bracket (5.2, 7.2) in which one of the two arms of the U is extended and contains a slot (5.3, 7.3); said U brackets (5.2, 7.2) being hinged by a pin (35, 37) to the free end of the last rods (3.1) of the two series of rods (1, 9) forming said structure, and by means of said slots (5.3, 7.3) the first is guided on one of the rod structure pins (39) located along the axis of symmetry of said structure, and the second is guided on the pin (15) of the spool (13) in such a way as to keep the sleeves (5.1, 7.1) lined up with each other however far the supporting device is extended.

8. Device according to one of Claims 1 to 7, in which the means (19) for opposing the free turning of the spool (13) in the unwinding direction of the cord (17) comprise: a ratchet mechanism with a toothed wheel (21) mounted coaxially on the spool (13) and pressed axially against the spool by a Belleville washer (23) with a force that can be adjusted by means of a nut (25) screwed onto a threaded seat (27) integral and coaxial with the spool (13), so as to create adjustable frictional torque between the toothed wheel (21) and the spool (13); and a pawl (29) mounted on one of the pairs of rods carrying the pin (15) of the spool (13), said pawl being acted on by a spring (33) so that one end (29.1) of the pawl is introduced between the teeth of the toothed wheel (21), thereby preventing it from rotating only in the direction of unwinding of the cord (17).

9. Device according to Claim 8, in which the other end (29.2) of said pawl (29) can be grasped manually to disengage the pawl (29) when it is wished to extend the supporting device without having to overcome the friction of the brake.

## Patentansprüche

1. Ausziehbare Vorrichtung zum Halten eines Gegenstands, speziell eines Beleuchtungsgeräts für Fotostudios, umfassend:
- eine Pantographstruktur, die gegenüberliegende parallele Reihen gelenkig verbundener Stäbe (3, 9) zum miteinander Verbinden zweier endseitiger Befestigungspunkte (5, 7) aufweist, von denen einer (7) zum Befestigtwerden an dem zu haltenden Gegenstand und der andere (5) zum Befestigtwerden an einer Haltestruktur gestaltet ist; und
- mindestens eine Spule (13) für eine Schnur (17), die auf diese Spule aufgewickelt und von ihr abgewickelt werden kann und an der Struktur aus gelenkig verbundenen Stäben (3, 9) befestigt ist, dadurch **gekennzeichnet**,
daß der von der Spule und der Schnur (13, 17) gebildete Aufbau durch die Verwendung elastischer Rückführmittel (16) und einer einstellbaren Bremse (23, 25), die auf die Spule (13) wirken, ein Mittel zum Ausgleich des Gewichts des von der Vorrichtung gehaltenen Gegenstands bildet.

2. Vorrichtung nach Anspruch 1,
in der die Spule (13) auf einem Stift (15), der die beiden gegenüberliegenden und parallelen Reihen (3, 9) gelenkig verbundener Stäbe miteinander verbindet, angebracht ist.

3. Vorrichtung nach Anspruch 1,
in der:
die Struktur aus gelenkig miteinander verbundenen Stäben, die in der Richtung einer geraden Linie (L-L), die die beiden endseitigen Befestigungspunkt (5, 7) miteinander verbindet, ausziehbar ist, symmetrisch um diese Linie und im wesentlichen starr in zu dieser Linie senkrechten Richtungen ist; die Spule (13) um einen in die Stabstruktur (3, 9) an einem Punkt in der Nähe von einem (7) der Befestigungspunkte (5, 7) eingesetzten Stift (15) drehbar, wobei die Spule mit Federmitteln (16) zum Aufwickeln der Schnur (17) versehen ist; die Schnur mit einem Ende an aer Stabstruktur nahe der Linie (L-L) an einem Punkt zwischen dem von der Spule am weitesten entfernten Befestigungspunkt (5) und der Spule (13) selbst befestigt und mit dem anderen Ende am Umfang der Spule (13) befestigt ist; wobei das Ausziehen der Stabstruktur die Schnur (17) aus der Spule herauszieht, wobei dem Herausziehen von Mitteln (19), welche die Drehung der Spule (13) nur in der Richtung des Abwickelns der Schnur einstellbar bremsen, entgegengewirkt wird, um der Komponente des Gewichts der Haltevorrichtung und des zu haltenden Gegenstands in der Auszugsrichtung der Stabstruktur entgegenzuwirken, um es zu ermöglichen, das Gesamtgewicht auszugleichen und den gehaltenen Gegenstand im gewünschten Abstand vom Haltepunkt an der Haltestruktur (5) zu halten; die freie Drehung der Spule in die entgegengesetzte Richtung zusammen mit dem Aufwickeln der Schnur (17) auf die Spule (13) darin resultiert, daß sich die Stabstruktur ohne eine zusätzliche Last zu der des Gesamtgewichts der Haltevorrichtung und des Gegenstands sowie der Reibung zwischen den beweglichen Teilen der Stabstruktur in die zur Auszugsrichtung entgegengesetzte Richtung bewegt.

4. Vorrichtung nach Anspruch 1, 2 oder 3,
in der die Spule besitzt: einen ausgesparten Sitz, welcher eine Spiralfeder (16) enthält, deren äußerstes Ende an der Spule und deren innerstes Ende an dem Stift befestigt ist, und einen an der dem ausgesparten Sitz gegenüberliegenden Seite liegenden und mit dem Stift (15) koaxialen Sitz (27) mit Gewinde, auf dem ein Zahnrad (21) angebracht ist, das zu einem ratschenartigen Arretierungsmechanismus gehört, wobei dieses Rad (21) zwischen dem Körper der Spule und einer Mutter (25), die auf den Sitz (27) aufgeschraubt ist, positioniert ist, während zwischen der Mutter (25) und dem Zahnrad (21) elastische Mittel (23) angebracht sind.

5. Vorrichtung nach Anspruch 4,
in welcher die elastischen Mittel eine Tellerfeder (23) umfassen.

6. Vorrichtung nach Anspruch 1, 2 oder 3,
in der die Struktur aus gelenkig verbundenen Stäben umfaßt: eine erste Reihe (1) von Stäben (3), die gelenkig miteinander verbunden sind, um eine Folge von deformierbaren Parallelogrammen zu bilden, die sich entlang der geraden Linie (L-L) erstrecken, die die beiden äußersten Haltepunkte (5, 7) verbindet, wobei jeder Stab einen Teil zweier aneinandergrenzender Parallelogramme bildet; und eine zweite Reihe (9) gelenkig miteinander verbundener Stäbe, die identisch mit der ersten Reihe (1) ist und letzterer gegenüberliegt, wobei die beiden Reihen zumindest die äußersten Gelenkstifte (11) der Stäbe (3) gemeinsam haben, so daß der Aufbau eine ausreichende transversale Steife aufweist.

7. Vorrichtung nach Anspruch 6,
in der jeder Haltepunkt (5, 7) eine Hülse (5.1, 7.1) aufweist, die mit einer Flügelmutter zum manuellen Feststellen des Haltepunkts der Haltevorrichtung an einen feststehenden Stab einerseits und des Objekts, das gehalten werden soll, an die Haltevorrichtung andererseits angepaßt ist; wobei jede Hülse (5.1, 7.1) fest an einer U-Klammer (5.2, 7.2), bei der einer der beiden Arme des U's verlängert ist und einen Schlitz (5.3, 7.3) enthält, verbunden ist;
wobei die U-Klammern (5.2, 7.2) mittels eines Stiftes (35, 37) mit dem freien Ende der letzten Stäbe (3.1) der beiden Reihen aus Stäben (1, 9), welche die besagte Struktur bilden, angelenkt sind, und wobei durch die Schlitze (5.3, 7.3) die erste auf einem der Stifte (39) der Stabstruktur, die entlang der Symmetrieachse der Struktur angebracht ist, geführt wird und die zweite auf dem Stift (15) der Spule (13) in einer solchen Weise geführt wird, daß die beiden Hülsen (5.1, 7.1) in einer Linie miteinander angeordnet bleiben, egal wie weit die Haltevorrichtung ausgezogen wird.

8. Vorrichtung nach einem der Ansprüche 1 bis 7,
wobei die Mittel (19) zum Entgegenwirken gegen die freie Drehung der Spule (13) in der Richtung des Abwickelns der Schnur (17) umfassen: einen Ratschenmechanismus mit einem Zahnrad (21), das koaxial an der Spule (13) angebracht ist und das von einer Tellerfeder (23) mit einer Kraft, die mit Hilfe einer auf den mit einem Gewinde versehenen Sitz (27), der integral und koaxial mit der Spule (13) ist, aufgeschraubten Mutter (25) eingestellt werden kann, axial gegen die Spule gedrückt wird, so daß ein justierbares Reibungsmoment zwischen dem Zahnrad (21) und der Spule (13) erzeugt wird; und eine Sperrklinke (29), die an einem der beiden Stäbepaare, welche den Stift (15) der Spule (13) tragen, angebracht ist, wobei auf die Sperrklinke von einer Feder (33) so eingewirkt wird, daß ein Ende (29.1) der Sperrklinke zwischen die Zähne des Zahnrades (21) eingeführt wird, wodurch dieses daran gehindert wird, sich nur in Richtung des Abwickelns der Schnur (17) zu drehen.

9. Vorrichtung nach Anspruch 8,
in der das andere Ende (29.2) der Sperrklinke (29) manuell erfaßt werden kann, um die Sperrklinke (29) außer Eingriff zu bringen, wenn es erwünscht ist, die Haltevorrichtung auszuziehen, ohne die Reibung der Bremse überwinden zu müssen.

## Revendications

1. Dispositif extensible destiné à supporter un objet, en particulier un appareil d'éclairage pour des studios de photographie, comprenant :
- une structure en pantographe comprenant des séries parallèles et opposées de tiges articulées (3, 9) destinée à relier entre eux deux points de fixation d'extrémité (5, 7), dont l'un (7) est destiné à être fixé sur l'objet à supporter et dont l'autre (5) est destiné à être fixé sur une structure de support ; et
- au moins un tambour (13) pour un câble (10), qui peut être enroulé sur ledit tambour et en être déroulé et est fixé à la structure de tiges articulées (3, 9),
caractérisé en ce que l'ensemble formé par le tambour et le câble (13, 17) constitue des moyens d'équilibrage du poids de l'objet supporté par ledit dispositif, grâce à l'utilisation de moyens de rappel élastiques (16) et de moyens de freinage réglables (23, 25) agissant sur ledit tambour (13).

2. Dispositif selon la revendication 1, dans lequel ledit tambour (13) est monté sur un axe (15) qui réunit entre elles deux séries opposées et parallèles (3, 9) de tiges articulées.

3. Dispositif selon la revendication 1, dans lequel : la structure des tiges articulées aptes à s'étendre dans la direction de la droite (L-L) reliant les deux points de fixation d'extrémité (5, 7) est symétrique par rapport à ladite droite et est essentiellement rigide dans des directions perpendiculaires à cette dernière ; le tambour (13) peut tourner autour d'un axe (15) inséré dans ladite structure de tiges (3, 9) en un point proche de l'un (7) desdits points de fixation (5, 7), ledit tambour étant pourvu de moyens formant ressort (16) servant à enrouler le câble (17) ; ledit câble possède une extrémité fixée à ladite structure de tiges à proximité de ladite droite (L-L) en un point situé entre le point de fixation (5) le plus éloigné du tambour et le tambour (13) lui-même, tandis que l'autre extrémité est fixée à la circonférence du tambour (13) ; et dans lequel le déploiement de la structure de tiges tire ledit câble (17) à partir du tambour, ledit tirage étant contrecarré par des moyens (19) qui freinent d'une manière réglable la rotation du tambour (13) uniquement dans le sens du déroulement du câble, de manière à s'opposer à la composante du poids du dispositif de support et à la composante du poids de l'objet devant être supporté dans la direction d'extension de la structure de tiges de manière à permettre de compenser ledit poids total et de maintenir l'objet supporté à la distance désirée du point de fixation sur la structure de support (5) ; la libre rotation du tambour en sens opposé conjointement avec l'enroulement du câble (17) sur le tambour (13) conduisant à un déplacement de la structure de tiges en sens opposé de celle de l'extension, sans aucune charge supplémentaire autre que celle du poids total du dispositif de support et de l'objet, et celle du frottement entre les pièces mobiles de ladite structure de tiges.

4. Dispositif selon la revendication 1, 2 ou 3, dans laquelle ledit tambour possède : un siège en renfoncement contenant un ressort spiral (16), dont l'extrémité la plus extérieure est fixée au tambour et dont l'extrémité intérieure est fixée à l'axe et, sur le côté situé à l'opposé dudit siège en renfoncement et dans une position coaxiale audit axe (15), un siège fileté (27), sur lequel est montée une roue dentée (21) faisant partie d'un mécanisme d'arrêt du type à cliquet, ladite roue (21) étant positionnée entre le corps du tambour et un écrou (25) vissé sur ledit siège (27), tandis que des moyens élastiques (23) sont disposés entre ledit écrou (25) et ladite roue dentée (21).

5. Dispositif selon la revendication 4, dans lequel lesdits moyens élastiques comprennent une rondelle Belleville (23).

6. Dispositif selon la revendication 1, 2 ou 3, dans lequel ladite structure de tiges articulé comprend : une première série (1) de tiges (3) articulées entre elles pour former une succession de parallélogrammes déformables s'étendant le long de la droite (L-L) reliant les deux points de fixation d'extrémité (5, 7), chaque tige faisant partie de deux parallélogrammes adjacents ; et une seconde série (9) de tiges articulées, identique à la première série (1) et située en face de cette dernière, les deux séries ayant en commun au moins les axes d'articulation les plus extérieurs (11) desdites tiges (3) de sorte que l'ensemble possède une rigidité transversale suffisante.

7. Dispositif selon la revendication 7, dans lequel lesdits points de fixation (5, 7) comprennent chacun un manchon (5.1, 7.1) équipé d'un écrou à oreilles permettant de fixer manuellement le point de fixation, d'une part, du dispositif de support sur une tige fixe et d'autre part, de l'objet devant être supporté audit dispositif de support ; lesdits manchons (5.1, 7.1) étant fixés chacun fermement à une console en U (5.2., 7.2) dans laquelle s'étend l'une des deux branches du U et qui comporte une fente (5.3, 7.3) ; lesdites consoles en U (5.2, 7.2) étant articulées au moyen d'une goupille (35, 37) à l'extrémité libre des dernières tiges (3.1) des deux séries de tiges (1.9) formant ladite structure, et au moyen desdites fentes (5.3, 7.3), dont la première est guidée sur l'une des goupilles (39) de la structure de tiges, située le long de l'axe de symétrie de ladite structure, et dont la seconde est guidée sur l'axe (15) du tambour (13) de manière à maintenir les manchons (5.1, 7.1) alignés entre eux, mais à distance lorsque le dispositif de support est déployé.

8. Dispositif selon l'une des revendications 1 à 7, dans lequel les moyens (19) destinés à s'opposer à la libre rotation du tambour (13) dans le sens de déroulement du câble (10) comprennent : un mécanisme à cliquet comportant une roue dentée (21) montée coaxialement sur le tambour (13) et repoussée axialement contre le tambour par une rondelle Belleville (23) avec une force qui peut être réglée à l'aide d'un écrou (25) vissé sur un siège fileté (27) solidaire du tambour (13) et coaxial à ce dernier, de manière à créer un couple de frottement réglable entre la roue dentée (21) et le tambour (13) ; et un cliquet (29) monté sur l'un des couples de tiges portant l'axe (15) du tambour (13), un ressort (33) agissant sur ledit cliquet de telle sorte qu'une extrémité (29.1) du cliquet est introduite entre les dents de la roue dentée (21), en l'empêchant de tourner uniquement dans le sens de déroulement du câble (17).

9. Dispositif selon la revendication 8, dans lequel l'autre extrémité (29.2) dudit cliquet (29) peut être saisie manuellement pour dégager le cliquet (29) lorsqu'on désire déployer le dispositif de support sans avoir à vaincre le frottement du frein.
